# EUROPEAN PATENT SPECIFICATION

(11) **EP 0 843 965 B1**
(45) Date of publication and mention of the grant of the patent: **18.12.2002**
(21) Application number: 97309340.4
(22) Date of filing: 20.11.1997
(51) Int. Cl.: A01N 25/18, A01N 65/00, A01N 47/46, A01N 35/06, A01N 35/02

(54) **A method of protecting agricultural products**
Verfahren zum Schutz landwirtschaftlicher Produkte
Procédé de protection des produits agricoles

(30) Priority: 22.11.1996 JP 31180996
(43) Date of publication of application: 27.05.1998
(73) Proprietor: Abion Corporation Co. Ltd., Tokyo 158 (JP)
(72) Inventor: Ohtsuka, Riichiro, Yamato-gun, Fukuoka-ken 835 (JP)
(74) Representative: Allard, Susan Joyce

(56) References cited:
- WO-A-92/18001
- WO-A-97/05781
- WO-A-97/35471
- WO-A-97/47193
- WO-A-98/17108
- PATENT ABSTRACTS OF JAPAN vol. 95, no. 2, 31 March 1995 & JP 06 319425 A (FURUTA DENKI), 22 November 1994,
- DATABASE WPI Section Ch, Week 8948 Derwent Publications Ltd., London, GB; Class C03, AN 89-351364 XP002056931 & JP 01 261 303 A (TAIYO KORYO KK) , 18 October 1989
- DATABASE CROPU STN-International STN-accession no. 91-87493, S.GRAEFF ET AL.: "The Effect of Ether Oils and Other Light Fluid Organic Compounds on Different Pathogenic Fungi" XP002056930 & MITT.BIOL.BUNDESANST.LAMDFORSTWIRTSCH., no. 266, 1990, page 220
- DATABASE WPI Section Ch, Week 9315 Derwent Publications Ltd., London, GB; Class C03, AN 93-121205 XP002056932 & JP 05 058 805 A (GREEN CROSS CORP) , 9 March 1993
- DATABASE WPI Section Ch, Week 9431 Derwent Publications Ltd., London, GB; Class C03, AN 94-252668 XP002056933 & JP 06 183 920 A (GREEN CROSS CORP) , 5 July 1994
- DATABASE WPI Section Ch, Week 9223 Derwent Publications Ltd., London, GB; Class D13, AN 92-189652 XP002056934 & JP 04 126 035 A (SUMITOMO SEIKA CHEM CO LTD) , 27 April 1992
- DATABASE WPI Section Ch, Week 9232 Derwent Publications Ltd., London, GB; Class C03, AN 92-265104 XP002056935 & JP 04 182 408 A (HINOKI SHINYAKU KK) , 30 June 1992
- DATABASE WPI Section Ch, Week 9503 Derwent Publications Ltd., London, GB; Class D13, AN 95-018253 XP002056936 & JP 06 303 952 A (OJIRO YUKAGAKU KENKYUSHO KK) , 1 November 1994
- DATABASE WPI Section Ch, Week 9327 Derwent Publications Ltd., London, GB; Class C05, AN 93-216621 XP002056937 & JP 05 139 924 A (ITOEN KK) , 8 June 1993
- PATENT ABSTRACTS OF JAPAN vol. 5, no. 12 (C-040), 24 January 1981 & JP 55 139301 A (AJINOMOTO), 31 October 1980,
- CHEMICAL ABSTRACTS, vol. 100, no. 17, 23 April 1984 Columbus, Ohio, US; abstract no. 134151, R.OHTSUKA ET AL.: "Effects of ABION CA chemicals on vegetable diseases" XP002056929 & KYUSHU BYOGAICHU KENKYUKAI, vol. 29, 1983, pages 48-51,

## Description

### BACKGROUND OF THE INVENTION

### 1. Field of the Invention

This invention relates to a method of protecting plants or crops in a facility or installation for cultivating agricultural products (which will hereinafter be referred to as "facility plants") from insect pests, microorganisms and pathogenic microbes, a method of imparting aroma thereto in a facility and a composition used for these methods. More particularly, it is concerned with a method of protecting facility plants from insect pests, decreasing bad influences on the human body, economizing working labors and destroying offensive odor due to organic substances and agricultural chemicals through aromatic effect to add tranquilization by evaporating and diffusing a high safety composition comprising, as a predominant component, volatile food additive such as cinnamic aldehyde or a volatile material including agricultural chemicals in a facility using a warming air boiler or electric heating plate for agriculture.

### 2. Description of the Prior Art

As a countermeasure for protecting plants from insect pests or pathogenic microbes, there have been proposed methods comprising diluting agricultural chemicals or plant protectors or activators with water and then spraying them on plants by means of power sprayers or fogging machines, methods comprising spraying or spreading powder materials such as flow dust agents and smoking methods comprising using smoking agents, but these methods have both merits and demerits as to efficiency, safety, working property, investment cost, etc.

For example, as the method comprising spraying an emulsion containing an agricultural chemical on an agricultural products by means of a power sprayer, it is generally carried out to dilute an agricultural chemical (insecticides, microbicides) with water in a suitable concentration, to spray the resulting emulsion on a plant, thus directly reacting it with insect pests, and to protect the plant.

Use of an emulsion containing cinnamic aldehyde for the protection of plants or crops is disclosed in Japanese Patent Publication No. 32283/1986 and US Patent No. 4,978,686.

Japanese Patent Abstract No. 1,261,303 discloses an agent for combatting Thysanoptera containing cinnamic aldehyde as an active component. The cinnamic aldehyde is mixed with carriers, such as ethyl alcohol, an emulsifier and other adjuvants to prepare an agent in the form of an oil, an emulsion, a hydrate or a powder. The concentration of cinnamic aldehyde in the agent is 0.1 - 30 wt.% for a liquid agent and 0.1 - 20 wt.% for a powder or granule.

Database Cropu STN-International STN-accession No. 91-87493, Mitt.Biol.Bundesanst.Lamdfortwirtsch No. 266, 1990, page 220 discloses a method for protecting begonias and cereals from mildew and bean rust in greenhouses using compositions of mustard oil and cinnamic aldehyde under gas phase conditions.

Japanese Patent Abstract No.5,139,924 discloses a plant disease control agent which contains an extract of one or more components of natural flavours, for example cinnamon or clove.

Chemical Abstract No. 134151 discloses the use of the food additive Abion CA (cinnamaldehyde) in controlling Pseudomonas solanaceareem on tomatoes as a soil fungicide.

WO 97/35471 describes methods and compositions based upon natural compounds, including balsam, cinnamic aldehyde, α-hexyl cinnamic aldehyde, and coniferyl aldehyde. The compositions are effective against pathogenic fungi, arachnids and insects at concentrations which are not phytotoxic to the treated host plant. Infestations of a variety of plant parts can be treated, including those of leaves, seeds, seedlings, fruit, flowers and roots. Susceptible organisms include rust, powdery mildew, botrytis, phylloxera, aphids, thrips, codling moth, nematodes and leaf hoppers.

It is generally said that agricultural products in facilities tend to be attacked by pathogenic microbes or insect pests depending on cultivating ambient conditions such as temperature, humidity, light, etc. and conditions for improving plants. Thus, extermination of pathogenic microbes or insect pests has been carried out by treating agricultural chemicals or plant activators, but in the prior art methods, such an extermination cannot be said sufficient with respect to applied labours, investment costs, safety, extermination effects and bad smell prevention.

### SUMMARY OF THE INVENTION

It is an object of the present invention to provide a method for protecting agricultural products or plants, whereby amounts of agricultural chemicals to be used can be reduced, influences upon environment, agricultural chemicals and human bodies can be decreased and applied labours for the treatment and investment costs can be decreased.

It is another object of the present invention to provide an emulsion composition for protecting agricultural products or plants, which is effective as an aromatic agent in a facility for cultivating agricultural products, having a high safety and characteristic odour, because its predominant component is a food additive and perfume, and further is also sufficiently effective as a countermeasure for offensive odour.

These objects can be obtained by a method of protecting agricultural products comprising heating a composition containing a volatile food additive in a facility for cultivating agricultural products, thereby evaporating and diffusing in the facility, and effecting extermination of microbes, sterilization, protection from insect pests and addition of aroma in the facility.

### DETAILED DESCRIPTION OF THE INVENTION

The present invention has been made so as to solve the above described problems of the prior art and the feature of the present invention consists in maintaining low density of plant insect pests and suppressing development of insect pests in easy manner by treating an emulsion composition containing cinnamic aldehyde and at least one member selected from Hinokitiol, allyl mustard oils and garlic extracts having sufficient estimation of safety, utilizing a warming air boiler or an electric heating plate having already been installed in a facility. Electric or oil stove or humidifier of heating type for facility plants can also be used.

The above described objects of the present invention can be attained by the following method and compositions according to the present invention and preferred embodiments thereof.

The present invention discloses a method of protecting agricultural products in a facility for the cultivation thereof by exterminating microbes, sterilizing and protecting against insect pests and of adding an aroma to the facility, which comprises heating an emulsion composition comprising an emulsifier, cinnamic aldehyde and at least one member selected from the group consisting of Hinokitiol, allyl mustard oils and garlic extracts, by a warming air boiler or an electric heating plate for agriculture in the facility.

In a preferred embodiment, the volatile food additives have a concentration of 0.05 to 0.5 ppm in the air in the facility.

The emulsion composition used in the above described method of the present invention contains cinnamic aldehyde (nonpoisonous material represented by chemical formula C₉H₈O and disclosed in an official document as a perfume and food additive) and at least one member selected from Hinokitiol (food additive represented by molecular formula C₁₀H₁₂O₂ and contained in a large amount in a part of wood belonging to Hinoki family or in Hinoki hiba arborvitae of hiba arborvitae genus in japan), allyl mustard oils (food additive represented by molecular formula C₄H₅NS and contained as a predominant component in wasabi oils or mustard oils) and garlic extracts.

In the method of the present invention, the above described composition is converted into an emulsion diluted with water or a solvent, arranged in the vicinity of an inner warm air blow-off port of a warming air boiler provided in a facility for cultivating agricultural products, for example, a vinyl plastic hothouse or plastic film house and then evaporated, diffused and uniformly spread in the facility by warm air of the boiler. The temperature near the warm air blow-off port is ordinarily 20 to 50 °C, preferably 40 to 43 °C and the concentration of volatile components in the air is 0.05 to 0.5 ppm, preferably 0.1 to 0.3 ppm.

The electric heating plate is composed of a number of plates for heating to accelerate evaporation of the volatile components and to utilize natural convection in the facility and thereby spreading the food additive in the facility. The above described concentration of the volatile components in the air can be realized by controlling the number of plates and the temperature.

The emulsion composition for protecting agricultural products, used in the method of the present invention is preferably used in the form of an emulsion of oil-in-water type comprising cinnamic aldehyde, and at least one member selected from Hinokitiol (extract) (main component:tuyapricin), allylmustard oils (another name: allyl isothiocyanate) and garlic extracts (Liliaceae Allium sativum, obtained by extracting bulbs of Allium sativum with an organic solvent). These components can be used, individually or in combination, preferably in a concentration of 15 to 30 weight %, more preferably 20 to 25 weight % in the emulsion. Percents are to be taken as those by weight unless otherwise indicated.

For example, 20 % of cinnamic aldehyde, 5 % of polyoxyethylene polyoxypropylene glycol, 5 % of oleic acid and 70 % of water are mixed by stirring at a high rate using a stirrer rotating at 3600 to 1500 rpm to obtain an emulsion of oil-in-water type. The thus obtained emulsion is suitably diluted with water (ordinarily 10 to 20 times) to hold antimicrobial acitivity to various plant microbes and protection effect from insect pests.

Of the above described food additives, cinnamic aldehyde is a compound having a molecular formula of C₉H₈O, molecular weight of 132.16, a specific gravity of 1.056, boiling point of 252°C (at 760 mmHg, decomposed in part) and 128-130 °C (at 20 mmHg) and melting point of -7 °C, that is a transparent colorless to light yellow liquid and has cinnamon perfume. This is designated as a food additive and has widely been used as perfumes for foods, spices and medicines. Hinokitiol is a white to light yellow crystal or crystalline powder which has peculiar oder and a molecular formula of C₁₀H₁₂O₂, molecular weight of 164.20 and melting point of 48 to 52 °C. Its extracted product is printed as a preservatives in a List of Food Additives in addition to chemical synthetic materials and has been used as a food use. In the present invention, the extracted product is preferably used after being dissolved in an alcohol, in particular, ethanol in an amount of 5 to 10 times by weight as much as it.

Allylmustard oil (allyl isothiocyanate) is a transparent white to light yellow oily liquid having a molecular formula of C₄H₅NS, molecular weight of 99.16, specific gravity of 1.018 to 1.023 and boiling point of 148 to 154 °C, that has peculiar stimulative oder. This is a predominant component in an essential oil of wasabi or mustard, which has been designated as a food additive and has mainly been used as a spice or medicine. Garlic extracts can be obtained in the form of an oil, paste, powder, etc. by extracting bulbs of Allium sativum with an organic solvent and printed as a preparation agent in a List of Food Additives in addition to chemical synthetic materials.

For emulsifying the above described food additive, it is preferable to use polyoxyethylene polyoxypropylene glycol or oleic acid as an emulsifier.

The present invention will be illustrated by the following Examples in detail without limiting the same.

### Example 1

A mixture of 20 % of cinnamic aldehyde, 10 % of an emulsifier (5 % of polyoxyethylene polyoxypropylene glycol, 5 % of oleic acid) and 70 % of water was stirred and emulsified for 5 minutes by means of a high speed stirrer. (A).

A mixture of 19 % of cinnamic aldehyde, 0.1 % of Hinokitiol (extract), 1 % of garlic extracts, 10 % of the above described emulsifier and 69.9 % of water was stirred and emulsified for 5 minutes by means of a high speed stirrer. (B).

A mixture of 18 % of cinnamic aldehyde, 1 % of allylmustard oil (allyl isothiocyanate), 1 % of garlic extract, 10 % of the above described emulsifier and 70 % of water was stirred and emulsified for 5 minutes by means of a high speed stirrer. (C).

Food additive emulsions prepared by the above described three kinds of production processes exhibited high stability and good suspensibility even if diluted with water (20 times) and furthermore, its solution had peculiar aroma. In order to investigate the antimicrobial acitivity to various plant microbes, the following tests were carried out.

Previously cultured plant microbes (Botrytis cinerea, Phytophthora capsici) were cut in 5 mm square and implanted on PSA culture medium in a petri. Furthre, the emulsions A, B and C were dropwise added to the scale, covered and cultured at 25 °C for 5 days, after which growth state of the microbes was investigated. The results are shown in Table 1, from which antimicrobial activity can be found as to each of the emulsions. After 5 days, growth of the microbes proceeded in Control Section, while growth of the microbes was hardly confirmed or considerably suppressed in Sections A, B and C.

**Table 1**

| Antimicrobial Activity Effect of Plant Microbes by Food Additive Emulsion Growth State of Plant Microbes After 5 Days | | |
|---|---|---|
| | Botrytis cinerea | Phytophthora capsici |
| Section A | ± | - |
| Section B | + | ± |
| Section C | - | - |
| Control Section | +++ | +++ |

### Example 2

Using the food additive emulsions (A), (B) and (C), prepared in the similar manner to Example 1, the following tests were carried out in order to investigate damage of plants from agricultural chemicals and influences upon the human body and to know such a concentration as not giving offensive smell next morning.

A solution obtained by adding a predetermined amount of each of the emulsions to 1000 ml of water was placed near an air blow-off port in a warming air boiler for seven days and nights and evaporated and filled in a vinyl plastic hothouse by operating the boiler. The temperature in the vicinity of the blow-off port was 40 to 43 °C and the concentration of volatile components was 0.03 to 0.5 ppm.

As is evident from results shown in Table 2, there were found no damage of plants from agricultural chemicals, nor bad influences upon the human body when using at most 100 ml of each of the emulsions per 20 a of the vinyl plastic hothouse.

**Table 2**

| Damage of Plants from Agricultural Chemicals and Degree of Smell by Food Additive Emulsion in Vinyl Plastic Hothouse | | | | | | |
|---|---|---|---|---|---|---|
| | | Tomato | Eggplant | Cucumber | Chrysanthemum | Orange |
| Emulsion A | | | | | | |
| 20 ml | Damage | - | - | - | - | - |
| | Smell | very little | very little | very little | very little | very little |
| 50 ml | Damage | - | - | - | - | - |
| | Smell | little | little | little | little | little |
| 100 ml | Damage | - | - | - | - | - |
| | Smell | medium | medium | medium | medium | medium |
| 200 ml | Damage | ± | - | - | ± | - |
| | Smell | much | much | much | much | much |

| Emulsion B | | | | | | |
|---|---|---|---|---|---|---|
| 20 ml | Damage | - | - | - | - | - |
| | Smell | very little | very little | very little | very little | very little |
| 50 ml | Damage | - | - | - | - | - |
| | Smell | little | little | little | little | little |
| 100 ml | Damage | - | - | - | - | - |
| | Smell | medium | medium | medium | medium | medium |
| 200 ml | Damage | ± | - | ± | ± | - |
| | Smell | much | much | much | much | much |

| Emulsion C | | | | | | |
|---|---|---|---|---|---|---|
| 20 ml | Damage | - | - | - | - | - |
| | Smell | very little | very little | very little | very little | very little |
| 50 ml | Damage | - | - | - | - | - |
| | Smell | little | little | little | little | little |
| 100 ml | Damage | - | - | - | - - | - |
| | Smell | medium | medium | medium | medium | medium |
| 200 ml | Damage | - | ± | ± | + | ± |
| | Smell | much | much | much | much | much |
| Note: (-) means no damage. | | | | | | |

### Example 3

Using the food additive emulsions (A), (B) and (C), prepared in the similar manner to Example 1, the following tests were carried out in order to investigate degrees of disease by main microbes and degrees of development of main insect pests in each plant.

A solution was prepared by adding a predetermined amount of each of the emulsions to 1000 ml of water and placed near an air blow-off port in a warming air boiler for 30 days and evaporated and filled in a vinyl plastic hothouse by operating the boiler in an analogous manner to Example 2. The temperature in the vicinity of the blow-off port was 35 to 43 °C and the concentration of volatile components was 0.03 to 0.2 ppm.

For comparison, the plants were treated with agricultural chemicals (microbicide, insecticide) two times at an interval of 10 days with provision of a non-treated section.

As is evident from results shown in Table 3, there was found decreased disease or development of main insect pests when using each of the emulsions in a range of 50 to 100 ml per 20 a of a vinyl plastic hothouse, which effect was substantially similar to the extermination effect by agricultural chemicals. In particular, an effect for main pests was markedly found.

**Table 3**

| Extermination Effect of Main Plant Insect Pests by Food Additive Emulsions in Facility | | | | | | |
|---|---|---|---|---|---|---|
| | Tomato | | Cucumber | | Orange | |
| | Leaf Mold* | Greenhouse White Fly** | Downy Mildew* | Aphid** | Gray Mold* | Spider Mite** |
| Emulsion A | | | | | | |
| 20 ml | 93.0 | 98.8 | 95.8 | 101.2 | 99.7 | 99.6 |
| 50 ml | 44.6 | 85.4 | 30.8 | 80.1 | 50.5 | 87.6 |
| 100 ml | 36.2 | 79.0 | 27.1 | 70.3 | 30.2 | 66.8 |

| Emulsion B | | | | | | |
|---|---|---|---|---|---|---|
| 20 ml | 88.7 | 95.7 | 93.3 | 70.6 | 98.8 | 92.1 |
| 50 ml | 41.8 | 79.0 | 50.4 | 44.3 | 55.0 | 60.9 |
| 100 ml | 38.9 | 60.1 | 33.3 | 10.5 | 47.0 | 55.7 |

| Emulsion C | | | | | | |
|---|---|---|---|---|---|---|
| 20 ml | 84.8 | 92.9 | 87.9 | 69.9 | 80.5 | 90.5 |
| 50 ml | 33.3 | 75.5 | 43.4 | 30.8 | 49.1 | 81.0 |
| 100 ml | 29.5 | 57.2 | 39.0 | 25.4 | 28.3 | 60.3 |

| Control | | | | | | |
|---|---|---|---|---|---|---|
| Section | 30.3 | 34.3 | 28.3 | 25.6 | 56.3 | 80.7 |

| Non-treated | | | | | | |
|---|---|---|---|---|---|---|
| Section | 100.0 | 100.0 | 100.0 | 100.0 | 100.0 | 100.0 |

| | | | | | | |
|---|---|---|---|---|---|---|
| Note: *) disease index | | | | | | |
| **) development index Disease index and Development index when index of Non-treated Section is 100.0. | | | | | | |

### Advantages of the Invention

As apparent from the foregoing illustrations and results of Examples, the present invention provides a method of protecting plants or crops in a facility or installation for cultivating agricultural products from insect pests, microorganisms and pathogenic microbes and a method of imparting aroma thereto in a facility, wherein agricultural plants are protected from insect pests and pathogenic microbes without unfavorably affecting the agricultural plants and laborsaving in the extermination operation and safety on the human body and agricultural products are improved by using a composition containing a volatile food additive, typical of which is cinnamic aldehyde having sufficient estimation of safety through a warming air boiler or electric heating plate for facility plants, having already been installed in a facility.

## Claims

1. A method of protecting agricultural products in a facility for the cultivation thereof by exterminating microbes, sterilizing and protecting against insect pests and of adding an aroma to the facility, which comprises heating an emulsion composition comprising an emulsifier, cinnamic aldehyde and at least one member selected from Hinokitiol, allylmustard oils and garlic extracts, by a warming air boiler or an electric heating plate for agriculture in the facility.

2. The method as claimed in claim 1 wherein the cinnamic aldehyde and at least one member selected from Hinokitiol, allylmustard oils and garlic extracts has a total concentration of 0.05 to 0.5 ppm in the air in the facility.

3. The method as claimed in claim 1 or 2 wherein the emulsifier is polyoxyethylene polyoxypropylene glycol and/or oleic acid.

4. The method as claimed in any one of the preceding claims wherein the composition comprises cinnamic aldehyde, Hinokitiol and garlic extracts.

5. The method as claimed in any one of claims 1 to 3 wherein the composition comprises cinnamic aldehyde, allylmustard oils and garlic extracts.

## Patentansprüche

1. Verfahren zum Schutz landwirtschaftlicher Produkte in einer Anlage für deren Kultivierung durch Vertilgen von Mikroben, Sterilisieren und Schützen gegen biologische Schädlinge und Zufügen eines Aromas zu der Anlage, welches das Erwärmen einer Emulsionszubereitung, umfassend einen Emulgator, Zimtaldehyd und mindestens ein Element, ausgewählt unter Hinokitiol, Allylsenfölen und Knoblauchextrakten, durch einen Warmluftdampfkessel oder eine elektrische Heizplatte für die Landwirtschaft in der Anlage umfasst.

2. Verfahren gemäß Anspruch 1, worin das Zimtaldehyd und mindestens ein Element, ausgewählt unter Hinokitiol, Allylsenfölen und Knoblauchextrakten, eine Gesamtkonzentration von 0,05 bis 0,5 ppm in der Luft in der Anlage aufweist.

3. Verfahren gemäß Anspruch 1 oder 2, worin der Emulgator ein Polyoxyethylenpolyoxypropylenglycol und/oder Ölsäure ist.

4. Verfahren gemäß einem der vorstehenden Ansprüche, worin die Zubereitung Zimtaldehyd, Hinokitiol und Knoblauchextrakte umfasst.

5. Verfahren gemäß einem der Ansprüche 1 bis 3, worin die Zubereitung Zimtaldehyd, Allylsenföle und Knoblauchextrakte umfasst.

## Revendications

1. Procédé pour la protection de produits agricoles dans une installation pour leur culture par extermination des micro-organismes, stérilisation et protection contre des insectes parasites et introduction d'un arôme dans l'installation, qui comprend le chauffage d'une composition en émulsion comprenant un émulsionnant, de l'aldéhyde cinnamique et au moins un membre choisi entre l'hinokitiol des essences de moutarde allylique et des extraits d'ail, par une chaudière à air chaud ou une plaque chauffante électrique dans l'installation, à des fins agricoles.

2. Procédé suivant la revendication 1, dans lequel l'aldéhyde cinnamique et au moins un membre choisi entre l'hinokitiol, des essences de moutarde allylique et des extraits d'ail a une concentration totale de 0,05 à 0,5 ppm dans l'air présent dans l'installation.

3. Procédé suivant la revendication 1 ou 2, dans lequel l'émulsionnant consiste en polyoxyéthylènepolyoxypropylèneglycol et/ou acide oléique.

4. Procédé suivant l'une quelconque des revendications précédentes, dans lequel la composition comprend de l'aldéhyde cinnamique, de l'hinokitiol et des extraits d'ail.

5. Procédé suivant l'une quelconque des revendications 1 à 3, dans lequel la composition comprend de l'aldéhyde cinnamique, des essences de moutarde allylique et des extraits d'ail.
